# EUROPEAN PATENT APPLICATION

(11) **EP 3 682 729 A1**
(43) Date of publication of application: **22.07.2020**
(21) Application number: 19152191.3
(22) Date of filing: 16.01.2019
(51) Int. Cl.: A01G 13/02, C05F 5/00, C09K 17/52, A01P 13/00, A01N 25/12

(54) **MULCH COMPOSITION**

(71) Applicant: Rendapart, 9300 Aalst (BE)
(72) Inventor: KRAUCH, Frans, 1790 Hekelgem-Affligem (BE)
(74) Representative: Gevers Patents

(57) **Abstract**

The present invention relates to a mulch composition (C) comprising at least 50 wt.% of cacao powder, and at most 20 wt.% of at least one long fiber compound, wherein said weight percentages are relative to the total weight of the composition.

## Description

### Field of invention

The present invention relates to an environmentally friendly mulch composition suitable for use as a hydraulic mulch composition for forming ground covers, in particular for covering soil surfaces, which prevent the growth of weeds or other undesirable plants over an extended period of time. The present invention further relates to the use of the composition, a method for the formation of a ground cover and a method for preventing weed growth.

### Background of the invention

In agriculture, the use of mulch compositions for forming a ground or soil cover for preventing the growth of weeds or other undesirable plants and to preserve the moisture in the soil, is well known. Various mulch materials are known such as straw, leaves, tree bark or wood chips and husks, shells or hulls from grain crops such as buckwheat, cocoa, rice and cottonseed. Such mulch materials are often sprinkled loosely onto the ground to form a ground cover causing the compactness of the resulting ground covers to be relatively low. Therefore, weeds or other undesirable plants are still able to grow through the ground cover and the evaporation of moisture from the soil is only partially prevented. To achieve a better effect in this respect, a relatively thick ground cover is required and hence a large amount of the mulch material needs to be applied.

Another type of mulch is hydraulic mulch. Hydraulic mulch can be used for forming ground covers by preparing a slurry of the hydraulic mulch material with water and by applying said slurry onto the ground, for example by spraying through a hydraulic seeder or a similar device. When the water in the applied slurry evaporates, the remaining hydraulic mulch material forms a crust which then functions as the ground cover. Among the hydraulic mulch materials which have been thus used are paper, wood and cellulose fibers, cotton fibers or micaceous materials. Typically, hydraulic mulches are applied to a soil to reduce erosion, to improve water retention, and/or in hydroseeding applications where (grass) seeds are mixed in with the hydraulic mulch slurry and the mulch is intended to hold the seeds in place on the soil surface long enough for the seeds to germinate and for the root to develop within the soil below.

Warnick, J. P. *et al.,* described the use of such hydraulic mulches for preventing the growth of weeds or other undesirable plants (Weed suppression with hydramulch, a biodegradable liquid paper mulch in development, Renewable Agriculture and Food Systems: 21(4); 216-223, 24 January 2006). Warnick, J. P. *et al.* applied "HydraMulch" which is composed of cotton waste and newsprint with gypsum as a filler and bound by an adhesive. However, these paper-like hydraulic mulches have a number of disadvantages. Paper-like hydraulic mulches are easily disrupted and even destroyed by heavy rains and they are particularly susceptible to brush fires when they are not properly fireproofed.

US 3,099,897 describes mulching materials comprising micaceous materials which are useful in inhibiting the growth of weeds or other undesirable plants. A slurry of mica flakes or platelets in water is applied onto the soil thereby forming a continuous mulching layer in which the finely divided mica platelets engage in overlapping fashion and cling tightly to each other. The disadvantage of such micaceous mulching layers is that they tend to be harder and less flexible, hence the ground covers made thereof will start to show cracks more easily.

In view of the above, there is a continuous need for improved mulch compositions suitable for use as hydraulic mulch for forming ground covers wherein said composition is effective in improving the compactness of the ground cover, the water permeability of the ground cover, thereby substantially avoiding the formation of puddles on the ground cover, preventing soil dehydration and soil erosion and wherein said composition prevents the formation of cracks in the ground cover, thereby preventing the growth of weeds or other undesirable plants through the ground cover over an extended period of time.

### Summary of the invention

The inventors have now surprisingly found that it is possible to provide a mulch composition fulfilling the above mentioned needs.

Thus, there is now provided a mulch composition [composition (C), herein after] comprising at least 50.0 weight percent [50.0 wt.%, herein after] of cacao powder, and from 1.0 wt.% to 20.0 wt.% of at least one long fiber compound, wherein said weight percentages are relative to the total weight of the composition.

In another aspect the present invention further provides a method for the formation of a ground cover comprising applying the mulch composition, as detailed above, and a method for suppressing or preventing the growth of weeds comprising applying the mulch composition, as detailed above.

### DETAILED DESCRIPTION

As used herein and in the claims, the terms "comprising" and "including" are inclusive or open-ended and do not exclude additional unrecited elements, compositional components, or method steps. Accordingly, the terms "comprising" and "including" encompass the more restrictive terms "consisting essentially of" and "consisting of".

### Composition

Thus, the mulch composition [composition (C), herein after] according to the present invention comprises at least 50 weight percent [50 wt.%, herein after] of cacao powder, as detailed above.

Within the context of the present invention, the terms "cacao" and "cocoa" have the same meaning and may be used interchangeably.

Within the context of the present invention, the term "powder" is intended to refer to any solid in a powder, granular, fragmented or equivalent state that is light in weight, with an average particle size of less than five millimeters (5.0 mm). For example, the term "cacao powder" refers to cacao powder, fragments, particles, flakes, granules, grains or other components obtained by grinding cacao, with an average particle size of less than 5.0 mm.

In general, the average particle size can be measured by methods known in the art, for example by particle size analyzers, methods such as measurement using light (light-scattering methods or turbidimetric methods), sedimentation methods (pipette analysis using an Andreassen pipette, sedimentation scales, photosedimentometers or sedimentation in a centrifugal force), pulse methods (Coulter counter), or sorting by means of gravitational or centrifugal force.

The inventors have found that by using cacao powder, instead of unground cacao beans, husks or hulls, a more compact and dense ground cover can be obtained. Cacao powder comprises short fiber particles which stick together when they are wetted, for example when preparing a slurry with water, and after application they will form a compact and dense crust structure which may function as a ground cover when the cacao powder particles dry up again. Such a dense, crust-like ground cover has several advantages compared to ground covers made of loose cacao beans, husks or hulls. The ground covers resulting from the composition (C) according to the present invention are less prone to removal by heavy rain or wind and they are more difficult to eat for animals. This may be important since cacao beans, husks and hulls can be toxic to certain animals such as dogs. Furthermore, by using the composition (C) the resulting ground covers are more compact. Hence, to prevent the growth of weeds or other undesirable plants and to preserve the moisture in the soil, the resulting ground cover does not need to be as thick as a ground cover made from loose cacao beans, husks or hulls. Therefore, less raw material is required and the resulting ground covers are cheaper to put in place.

In general, the average particle size of the cacao powder can also be less than 4.0 mm, or less than 3.0 mm, or less than 2.5 mm, or less than 2.0 mm or less than 1.0 mm.

The inventors have further found that in order to form a uniform and compact ground cover, the composition (C) should comprise at least 50.0 wt.% of cacao powder.

In a preferred embodiment of the present invention, the composition (C) comprises at least 55.0 wt.% of cacao powder, preferably at least 60.0 wt.%, more preferably at least 65.0 wt.%, more preferably at least 70.0 wt.%, even more preferably at least 75.0 wt.%, and most preferably at least 80.0 wt.%, relative to the total weight of the composition (C).

It is further understood that the upper limit of the weight percent of the cacao powder is preferably equal to or less than 98.0 wt.%, more preferably equal to or less than 97.0 wt.%, even more preferably equal to or less than 96.0 wt.% and most preferably equal to or less than 95.0 wt.%, relative to the total weight of the composition (C).

Cacao powder may be obtained by grinding cacao beans, cacao husks, cacao hulls or shells, or a mixture of two or more thereof, thereby obtaining cacao bean powder, cacao husk powder, cacao hull or shell powder or a mixture of two or more thereof, respectively.

It is further understood that the terms "cacao shells" and "cacao hulls" have the same meaning and may be used interchangeably. When cacao beans are roasted, the hull separates from the bean and is discarded. Hence, it is advantageous to use cacao hulls since they are a waste product of cacao beans obtained in the chocolate industry.

In a preferred embodiment of the composition (C) according to the present invention, the cacao powder is cacao hull powder.

Thus, the composition (C) according to the present invention comprises equal to or less than 20 wt.% of at least one long fiber compound, relative to the total weight of the composition (C).

Within the context of the present invention, the term "long fiber compound" is intended to refer to fibrous materials having an average fiber length of equal to or more than 5.0 mm. For example, an average fiber length of 10.0 mm means that the average of the lengths of randomly selected 50 long fiber compounds used as a raw material for the composition (C) is 10.0 mm, wherein the fiber lengths are measured by methods known in the art.

As said, the inventors have found that by using cacao powder a compact and dense ground cover may be obtained. The inventors have further found that by mixing cacao powder with a long fiber compound for forming ground covers, hence by using the composition (C) according to the present invention, the obtained ground cover is much less prone to cracking. The combination of short fibers in the cacao powder and the long fiber compound result in a composition (C) which may be used to form more dense and more compact ground covers, which do not crack easily. Furthermore, the long fiber compounds ensure that the cacao powder particles stick together even when only a thin layer of the composition (C) is applied onto the ground. Most importantly, the obtained ground covers are less prone to cracks which run completely through the ground cover. The prevention or slowing down of such cracks is important since these cracks expose the ground or soil beneath and in that way increase the chance of weeds or other unwanted plants to grow through the cracks and they allow the moisture in the soil to evaporate. Without being bound by this theory, the inventors believe that the long fiber compounds help to resist tensile stresses (much like the principle of reinforced concrete) and thereby help to reduce cracking of the ground cover and stop developing cracks from propagating throughout the ground cover. The resistance to tensile stresses depends on the type of long fiber compound that is used but in general, selecting long fiber compounds having a higher average fiber length will increase the resistance to tensile stress.

In a preferred embodiment of the composition (C) according to the present invention, the average fiber length of the at least one long fiber compound is between 5.0 mm and 20.0 mm, preferably between 5.0 mm and 15.0 mm, more preferably between 5.0 mm and 10.0 mm.

The inventors have found that the upper limit of the weight percent of the at least one long fiber compound in the composition (C) should be limited to at most 20.0 wt.%. As said, the inventors believe that, in certain amounts, the long fiber compounds help to resist tensile stresses in the resulting ground cover. However, when the amount of the long fiber compound in the composition (C) is too high, they will disrupt and break up the compact crust structure that is formed by the cacao powder. Hence, when the amount is too high the resulting ground cover tends to be less uniform and less compact.

In a preferred embodiment of the present invention, the composition (C) comprises at most 17.5 wt% of at least one long fiber compound, preferably at most 15.0 wt%, more preferably at most 12.5 wt%, even more preferably at most 10.0 wt%, yet even more preferably at most 7.5 wt% and most preferably at most 6.0 wt%, relative to the total weight of the composition (C).

It is further understood that the lower limit of the weight percent of the at least one long fiber compound is preferably equal to or more than 1.0 wt.%, more preferably equal to or more than 1.5 wt.%, even more preferably equal to or more than 2.0 wt.% and most preferably equal to or more than 2.5 wt.%, relative to the total weight of the composition (C).

Suitable long fiber compounds for use in the composition (C) according to the present invention, may be derived from natural fibers made from plant or animal sources, synthetic fibers, or a mixture of two or more thereof.

After the ground cover has served its purpose, it can be intermixed with the soil so it becomes a part thereof. Hence, when the long fiber compounds in the composition (C) are derived from synthetic fibers, they are preferably also biodegradable. Non-limiting examples of synthetic fibers suitable for use as long fiber compounds in the composition (C) according to the present invention include poly lactic acid (PLA) fibers, polhydroxyalkanoates (PHA) fibers and polycaprolactone (PCL) fibers.

In a preferred embodiment of the composition (C) according to the present invention, the long fiber compound is derived from natural fibers made from plant or animal sources.

Non-limiting examples of suitable animal sources include silk fibers, animal hair fibers such as wool, horse hair and mixtures thereof.

Non-limiting examples of suitable plant sources include wood fibers, leaf fibers such as abaca, sisal, raffia and banana leaf fibers; stalk fibers such as stalks from wheat, rice, barley, bamboo and straw; bast fibers such as flax, hemp, jute, ramie, rattan, vine and kenaf; fruit fibers such as coconut fibers or coir, hay and mixtures of two or more thereof. Cacao fibers with an average particle size of more than five millimeters (5 mm) may also be included.

It is understood that in most cases, different parts of plant materials may be used to obtain suitable long fiber compounds. For example, long fiber compounds derived from flax may be derived from flax chaff, flax straw or flax fibers.

Preferably, the long fiber compound for use in the composition (C) according to the present invention is selected from flax chaff, flax straw, flax fibers, coconut fibers or mixtures of two or more thereof. More preferably, the long fiber compound is selected from flax chaff or coconut fibers. Most preferably, the long fiber compound is flax chaff.

In a preferred embodiment of the present invention, the composition (C) further comprises at least one moisture regulating agent.

Moisture regulating agents in the composition (C) help to increase the water-permeability of the resulting ground covers. Typically, such covers are placed around already existing desired plants or are used to cover an entire area of ground which is then perforated at points where seeding and the growth of desired plants are desired. Water and oxygen are important elements for the desired plants to grow and hence it is important that water and/or oxygen can pass through the ground cover.

The inventors have now surprisingly found that by incorporating at least one moisture regulating agent in the composition (C) according to the present invention, the development of cracks in the resulting ground covers is further prevented and slowed down. Without being bound to this theory, the inventors believe that due to the increased water-permeability, the resulting ground covers stay more moist and flexible so that the formation of cracks is prevented and slowed down. Furthermore, the increased water-permeability prevents the formation of puddles on top of the ground cover, in particular during and after pouring rain. The inventors believe that puddles might locally increase the stress on top of the ground cover thereby causing cracks to develop. Hence, by avoiding the formation of puddles, the development of cracks is stopped or at least slowed down, the soil can stay hydrated and the growth of weeds can be effectively inhibited over a more extended period of time.

When at least one moisture regulating agent is present in the composition (C), the amount and the average particle size is preferably adapted so to ensure the uniformity and the compactness of the resulting ground covers. The moisture regulating agent should increase the water-permeability of the ground cover but should not disrupt or break up the crust-like structure of the ground cover thereby causing cracks to be developed in the ground cover. The skilled person is able to determine a suitable amount and particle size without any undue burden.

In a preferred embodiment of the present invention, the composition (C) further comprises at most 15.0 wt.% of at least one moisture regulating agent, preferably at most 12.5 wt.%, more preferably at most 10.0 wt.%, even more preferably at most 7.5 wt.% and most preferably at most 6.0 wt.%, relative to the total weight of the composition (C).

It is further understood that the lower limit of the weight percent of the at least one moisture regulating agent is preferably equal to or more than 0.5 wt.%, more preferably equal to or more than 1.0 wt.%, even more preferably equal to or more than 1.5 wt.% and most preferably equal to or more than 2.0 wt.%, relative to the total weight of the composition (C).

In a preferred embodiment of the composition (C) according to the present invention, the average particle size of the at least one moisture regulating agent equal to or at most 5.0 mm, preferably equal to or at most 4.5 mm, more preferably equal to or at most 4.0 mm, even more preferably equal to or at most 3.5 mm and most preferably equal to or at most 3.0 mm.

It is further understood that the average particle size of the at least one moisture regulating agent is equal to or at least 0.1 mm, preferably equal to or at least 0.5 mm, more preferably equal to or at least 1.0 mm.

The choice of the at least one moisture regulating agent, when comprised in the formulation (C) of the present invention, is not particularly limited and any moisture regulating agent that is compatible for use in composition for forming a ground cover and which increases the water-permeability of said ground cover, may be used.

This being said, the at least one moisture regulating agent is advantageously selected from rock gravel, grit or split such as pea gravel, basalt split, dolomite or granite grit; concrete grit; baked clay; expanded clay agglomerates; calcine clay; akadama; pumice; asphalt; lava split or lava grit; perlite and expanded perlite; vermiculite; charcoal such as biochar; coarse sand such as silica sand; sea shell debris; or a mixture of two or more thereof, preferably lava split or lava grit.

In a preferred embodiment of the present invention the composition (C) comprises at least 50 wt.% of cacao powder, as detailed above, at most 20 wt.% of at least one long fiber compound, as detailed above, and at most 15 wt.% of at least one moisture regulating agent, as detailed above.

In certain embodiments of the present invention, the composition (C) further comprises at least one binding agent.

The inventors have now surprisingly found that by incorporating at least one binding agent in the composition (C) according to the present invention, the development of cracks in the resulting ground covers is even further prevented and slowed down. The inventors believe that the binding agent ensures a good compatibility and cohesive bond between the different components in the composition (C) when the composition is used for forming a ground cover, which increases the integrality of the resulting ground cover, makes it a more cohesive whole and thereby also increases it's resistance to cracking during a longer period of time. Hence, the soil can stay hydrated and the growth of weeds can be effectively inhibited over a more extended period of time.

When at least one binding agent is present in the composition (C), the amount and the average particle size is preferably adapted so to ensure the uniformity and the compactness of the resulting ground covers. The skilled person is able to determine a suitable amount and particle size without any undue burden.

In a preferred embodiment of the present invention, the composition (C) further comprises at most 15.0 wt.% of at least one binding agent, preferably at most 13.0 wt.%, more preferably at most 12.0 wt.% and most preferably at most 11.0 wt.%, relative to the total weight of the composition (C).

It is further understood that the lower limit of the weight percent of the at least one binding agent is preferably equal to or more than 1.0 wt.%, more preferably equal to or more than 2.5 wt.%, even more preferably equal to or more than 3.5 wt.% and most preferably equal to or more than 4.0 wt.%, relative to the total weight of the composition (C).

The choice of the at least one binding agent, when comprised in the formulation (C) of the present invention, is not particularly limited and any binding agent that is compatible for use in composition for forming a ground cover and which increases the compatibility and the cohesive bond between the different components of the composition (C) when it is used to form a ground cover, may be used.

This being said, the at least one binding agent is advantageously selected from xanthan gum; guar gum; gum arabic; shellac; karaya gum; candelilla wax; tragacanth gum; resins; chalk; liquid glass; lactose powder; diatomaceous earth; rock dust such as basalt powder, lava powder, lime powder, gypsum powder, pumice powder and the like; fly ash; algae powder; cellulose powder; starch powder; zein powder; lignosulfonates; molasses or molasses extracts; vinasses or vinasses extracts, clay minerals such as bentonite, montmorillonite, illite, and kaolinite; loam; animal or plant glue and synthetic binding agents such as synthetic glue, or a mixture comprising at least two thereof, preferably selected from bentonite, lime or mixtures thereof.

In a more preferred embodiment of the present invention the composition (C) comprises at least 50 wt.% of cacao powder, as detailed above, at most 20 wt.% of at least one long fiber compound, as detailed above, at most 15 wt.% of at least one moisture regulating agent, as detailed above, and at most 15 wt.% of at least one binding agent, as detailed above.

According to certain other embodiments the composition (C) of the present invention may further comprise other common additional ingredients [ingredient (I), herein after] to enhance the appearance, storage, transport, handling and/or performance of the product. Said ingredients (I) are known to those skilled in the art of agricultural management compositions. Typical ingredients (I) may include, but are not limited to agents to enhance the shelf life of the product, colorants, fragrances, fertilizers, secondary nutrients such as but not limited to sources of calcium, magnesium and sulfur, micronutrients such as but not limited to sources of boron, cobalt, iron, manganese, molybdenum, zinc, and copper, and plant protection agents, such as herbicides, pesticides, insecticides, miticides, acaricides, nematicides, fungicides, bactericides, rodenticides and growth-regulating agents.

Typically, the amount of the ingredient (I), when present, is from 0.1 wt. % to 20 wt. %, more preferably from 0.1 wt. % to 10 wt %, most preferably from 0.1 wt. % to 5 wt. %, relative to the total weight of the composition (C).

Preferably, the composition (C) is in the form of a solid composition. For the purpose of the present invention, the term "solid composition" is intended to refer to a composition in the form of powders, fibers, dusts, tablets, pellets, or a granular form such as granules or crumbs, or mixtures of two or more thereof.

### Method for manufacturing the composition (C)

The methods to manufacture composition (C) are also an aspect of the present invention.

It is further understood that all definitions and preferences, as described above, equally apply for all further embodiments, as described below.

The composition (C) of the present invention can be prepared by a variety of methods known in the art.

In one embodiment of the present invention, the method for the manufacturing of the composition (C), as detailed above, comprises intimate admixing of at least 50 wt.% of the cacao powder, as detailed above, and at most 20 wt.% of at least one long fiber compound, as detailed above, optionally at most 15 wt.% of at least one moisture regulating agent, as detailed above, optionally at most 15 wt.% of at least one binding agent, as detailed above, and optionally any additional ingredient (I), as detailed above, into a homogeneous mixture wherein said homogeneous mixture may be further converted into a pellet form, tablet form or granular form such as granules or crumbs, or mixtures thereof. Such conversion methods are known in the art.

It is understood that the skilled person in the art will carry out said intimate admixing according to general practice such as notably using optimal times, speeds, weights, volumes and batch quantities.

It is further understood that the cacao powder may be introduced in the form of a powder or dust, however, it may also be present in a compressed form such as tablets, pellets or granules to manufacture the composition (C).

### Method for forming a ground cover

A method for forming a ground cover by applying the composition (C), as detailed above, is also an aspect of the present invention.

It is further understood that all definitions and preferences, as described above, equally apply for all further embodiments, as described below.

The inventors have found that the composition (C) may be used as a mulch to form ground covers. In order to form a more compact, crust-like ground cover, the composition (C) requires interaction with water. So it is understood that after application of the composition (C) onto the ground, the crust-like ground cover is only formed when the composition (C) is contacted with water, such as after a rain shower or after sprinkling with water. After the water evaporates or seeps into the ground, the crust-like ground cover is formed.

In one embodiment of the present invention, the method for forming a ground cover comprises applying the composition (C) to a locus or area to be covered, optionally followed by applying water, thereby forming a ground cover.

The inventors have further found that the composition (C) is particularly suitable for use as an hydraulic mulch when it is in the form of a slurry with water. The slurry is applied onto the ground and after the water evaporates or seeps into the ground, the crust-like ground cover is formed.

The skilled in the art will have no trouble in preparing a slurry of the composition (C) according to the present invention with water. Typically, the composition (C) is mixed with water in amounts varying from 0.5 kg of the composition (C) per 1.0 L of water to 0.5 kg of the composition (C) per 2.0 L of water, preferably in amounts varying from 0.5 kg of the composition (C) per 1.3 L of water to 0.5 kg of the composition (C) per 1.7 L of water.

In a preferred embodiment of the present invention, the method for forming a ground cover comprises preparing a slurry of the composition (C) with water and applying said slurry to a locus or area to be covered, thereby forming a ground cover.

In a more preferred embodiment of the present invention, the method for forming a ground cover comprises preparing a slurry of the composition (C) with water and applying said slurry to a locus or area to be covered by means of a hydroseeder, thereby forming a ground cover.

The method for forming a ground cover comprises applying said composition (C) according to the present invention or a slurry with water thereof, as detailed above, to a locus or area to be covered, such as but not limited to agricultural fields, turf and ornamentals, onto the soil between perennial plants, in borders or in other garden areas, onto the soil in pots or containers comprising desirable plants (e.g. container cultivation and/or pot culture), onto the soil between shrubs and nursery trees, etc.
It is understood that the composition (C) according to the present invention or a slurry with water thereof, as detailed above, can be applied to the ground before planting, in which case perforations are made in the resulting ground cover for the insertion of seeds of desirable plant growth. On the other hand, the composition (C) according to the present invention or a slurry with water thereof, as detailed above, can be applied after the first appearance of the desired plant life with the composition (C) or the slurry with water thereof being applied either in the immediate area of the plant or over the entire growing area to prevent the growth of weeds or other undesirable plants and to preserve the moisture in the soil.

Among suitable manners for applying the composition (C), mention may be notably made of scattering, broadcasting, sprinkling, pouring, and the like by hand or by using conventional equipment.

Among suitable manners for applying a slurry of the composition (C) with water, as detailed above, mention may be notably made of spraying, sprinkling, pouring, and the like by using suitable equipment for applying a slurry such as a hydroseeder, a slurry applicator and the like.

The skilled in the art will apply the composition (C) or the slurry thereof, in an amount sufficient to effect the desired action. This amount is dependent upon many factors, including the effective time desired, the method and conditions of the application.

### Method for inhibiting the growth of weeds

A method for inhibiting the growth of weeds or other undesirable plants by using the composition (C) as detailed above, is also an aspect of the present invention.

A method of inhibiting or preventing the growth of weeds by applying the composition (C), as detailed above, or a slurry with water thereof, thereby forming a ground cover is also an aspect of the present invention.

It is further understood that all definitions and preferences, as described above, equally apply for all further embodiments, as described below.

The inventors have found that ground cover that is formed by applying the composition (C), as detailed above, or a slurry with water thereof, as detailed above, is particularly suitable to inhibit or prevent the growth of weeds or other undesirable plants.

In one embodiment of the present invention, the method of inhibiting or preventing the growth of weeds comprises applying the composition (C) to a locus or area to be covered, optionally followed by applying water, thereby forming a ground cover which inhibits or prevents the growth of weeds.

In a preferred embodiment of the present invention, the method of inhibiting or preventing the growth of weeds comprises preparing a slurry of the composition (C) with water and applying said slurry to a locus or area to be covered, thereby forming a ground cover which inhibits or prevents the growth of weeds.

In a more preferred embodiment of the present invention, the method of inhibiting or preventing the growth of weeds comprises preparing a slurry of the composition (C) with water and applying said slurry to a locus or area to be covered by means of a hydroseeder, thereby forming a ground cover which inhibits or prevents the growth of weeds.

### Examples:

The invention will be now described in more details with reference to the following examples, whose purpose is merely illustrative and not intended to limit the scope of the invention.

### Example 1. Materials and methods.

- finely ground cacao hulls (i.e. cacao hull powder); having an average particle size of less than 1.0 mm
- long fiber compound: flax chaff; having an average fiber length between 5.0 to 10.0 mm
- moisture regulating agent: lava grit; having an average particle size between 1 to 3 mm
- binding agent: bentonite clay and lime: having an average particle size of less than 1.0 mm

The compositions (C) (i.e. compositions I to IV) are prepared as indicated in Table 1. The weight percentage of each of the components is relative to the total weight of the composition (C). All components were weighed and intimately mixed by dry mixing.

**Table 1.**

| **Composition** | **Components of Composition (C)** | | | | |
|---|---|---|---|---|---|
| | **Cacao hull powder** | **Flax chaff** | **Lava grit** | **Bentonite clay** | **Lime** |
| **I** | 80.0 wt.% | 5.0 wt.% | 5.0 wt.% | 5.0 wt.% | 5.0 wt.% |
| **II** | 85.0 wt.% | 5.0 wt.% | / | 5.0 wt.% | 5.0 wt.% |
| **III** | 90.0 wt.% | 5.0 wt.% | 5.0 wt.% | / | / |
| **IV** | 95.0 wt.% | 5.0 wt.% | / | / | / |

### Example 2. Inhibitory effects on growth of weeds and evaluation of development of cracks

The compositions (C) (i.e. compositions I to IV) were spread onto the soil surface of five different plots until a layer with a thickness of about 1 cm was obtained. After the compositions were spread, the plots were wetted with an excesses of water. The size of each of the plot was about 40 cm by 100 cm.

On day 0, day 7, day 14 and day 21, two assessments of the growth of weeds (M1) and the development of cracks (M2) and on the different plots were carried out by four observers (W1-W4). The visual observations were converted to a mark from 0 to 10.

In the assessment of the growth of weeds (M1), 0 means no growth of weeds on or through the ground cover, whereas 10 means a plot full of weeds. In the assessment of the development of cracks (M2), 0 means no development of cracks in the ground cover, whereas 10 means a plot full of small and big cracks in the ground cover.
The results of the assessment on day 0, day 2 and day 4 are listed in Tables 2 - 5, respectively. In each of the Tables 2 - 5, the last row represents the assessment of the growth of weeds (M1) when the soil surface of five different plots were not treated.

**Table 2**

| **Assessment on day 0** | | | | | | | | |
|---|---|---|---|---|---|---|---|---|
| **Composition** | **Observer W1** | | **Observer W2** | | **Observer W3** | | **Observer W4** | |
| | **M1** | **M2** | **M1** | **M2** | **M1** | **M2** | **M1** | **M2** |
| **I** | 0 | 0 | 0 | 0 | 0 | 0 | 0 | 0 |
| **II** | 0 | 0 | 0 | 0 | 0 | 0 | 0 | 0 |
| **III** | 0 | 0 | 0 | 0 | 0 | 0 | 0 | 0 |
| **IV** | 0 | 0 | 0 | 0 | 0 | 0 | 0 | 0 |
| **No treatment** | 0 | n.a. | 0 | n.a | 0 | n.a | 0 | n.a |

| | | | | | | | | |
|---|---|---|---|---|---|---|---|---|
| n.a. means not applicable | | | | | | | | |

**Table 3**

| **Assessment on day 7** | | | | | | | | |
|---|---|---|---|---|---|---|---|---|
| **Composition** | **Observer W1** | | **Observer W2** | | **Observer W3** | | **Observer W4** | |
| | **M1** | **M2** | **M1** | **M2** | **M1** | **M2** | **M1** | **M2** |
| **I** | 0 | 0 | 0 | 0 | 0 | 1 | 0 | 0 |
| **II** | 0 | 6 | 0 | 5 | 0 | 7 | 0 | 6 |
| **III** | 0 | 3 | 0 | 2 | 0 | 4 | 0 | 2 |
| **IV** | 3 | 10 | 2 | 10 | 3 | 10 | 2 | 9 |
| **No treatment** | 4 | n.a. | 4 | n.a | 5 | n.a | 4 | n.a |

| | | | | | | | | |
|---|---|---|---|---|---|---|---|---|
| n.a. means not applicable | | | | | | | | |

**Table 4**

| **Assessment on day 14** | | | | | | | | |
|---|---|---|---|---|---|---|---|---|
| **Composition** | **Observer W1** | | **Observer W2** | | **Observer W3** | | **Observer W4** | |
| | **M1** | **M2** | **M1** | **M2** | **M1** | **M2** | **M1** | **M2** |
| **I** | 0 | 0 | 0 | 0 | 0 | 1 | 0 | 0 |
| **II** | 2 | 6 | 1 | 6 | 1 | 7 | 2 | 7 |
| **III** | 0 | 3 | 0 | 3 | 0 | 4 | 0 | 2 |
| **IV** | 4 | 10 | 3 | 10 | 3 | 10 | 3 | 9 |
| **No treatment** | 7 | n.a. | 6 | n.a | 6 | n.a | 6 | n.a |

| | | | | | | | | |
|---|---|---|---|---|---|---|---|---|
| n.a. means not applicable | | | | | | | | |

**Table 5**

| **Assessment on day 21** | | | | | | | | |
|---|---|---|---|---|---|---|---|---|
| **Composition (C)** | **Observer W1** | | **Observer W2** | | **Observer W3** | | **Observer W4** | |
| | **M1** | **M2** | **M1** | **M2** | **M1** | **M2** | **M1** | **M2** |
| **I** | 0 | 0 | 0 | 0 | 0 | 1 | 0 | 0 |
| **II** | 3 | 6 | 2 | 6 | 2 | 7 | 3 | 8 |
| **III** | 0 | 3 | 0 | 3 | 0 | 4 | 0 | 2 |
| **IV** | 6 | 10 | 5 | 10 | 4 | 10 | 5 | 10 |
| **No treatment** | 9 | n.a. | 9 | n.a | 10 | n.a | 9 | n.a |

Based on Table 2, Table 3, Table 4, and Table 5, the averages of the results of the assessments were calculated which are shown below in Table 6 and Table 7. The higher the mark, the more weeds grow or the more cracks are developed on the ground cover.

**Table 6. Average growth of weeds on the ground cover**

| **Composition** | **Day 0** | **Day 7** | **Day 14** | **Day 21** |
|---|---|---|---|---|
| **I** | 0 | 0 | 0 | 0 |
| **II** | 0 | 0.25 | 1.50 | 2.50 |
| **III** | 0 | 0 | 0 | 0 |
| **IV** | 0 | 2.50 | 3.25 | 5.00 |
| **No treatment** | 0 | 4,25 | 6,25 | 9.00 |

**Table 7. Average development of cracks on the ground cover**

| **Composition** | **Day 0** | **Day 7** | **Day 14** | **Day 21** |
|---|---|---|---|---|
| **I** | 0 | 0 | 0.25 | 0 |
| **II** | 0 | 6.00 | 6.50 | 6.75 |
| **III** | 0 | 2.75 | 4.00 | 3.00 |
| **IV** | 0 | 9.75 | 9.75 | 10.00 |

Based on the results in Table 6 and Table 7, composition I comprising cacao hull powder, a long fiber compound, a moisture regulating agent and a binding agent, performs best. When composition I was applied onto the soil surface of a plot, after 21 days still little to no cracks were developed on the resulting ground cover and thereby there were no weeds growing on the ground cover. It was also observed that the ground cover had a consistent texture.
When composition II, comprising cacao hull powder, a long fiber compound and a binding agent, was applied onto the soil surface of a plot, locally big cracks developed on the ground cover within a short time. During rain showers, puddles were formed on top of the ground cover which caused the cracks to appear at those locations. As time went by, the size of the cracks became bigger, very likely due to the changes of weather. As the cracks became bigger, some weeds also started to grow through the ground cover.
When composition III, comprising cacao hull powder, a long fiber compound and a moisture regulating agent, was applied onto the soil surface of a plot, only very small cracks appeared within a short time. Due to the presence of the moisture regulating agent, no puddles were formed on top of the ground cover during rain showers. The cracks which were formed, were very small and did not run completely throughout the ground cover so that no weeds could grow through of the ground cover.
When composition IV, comprising cacao hull powder and a long fiber compound, was applied onto the soil surface of a plot, some large and smaller cracks appeared after the ground cover dried up, the smaller cracks did not run completely through the ground cover. After some time weeds started to grow in the larger cracks of the ground cover.
When only cacao hull powder, was applied onto the soil surface of a plot, a lot of larger cracks appeared during the drying up of the ground cover which ran completely through the ground cover. The ground cover started to disintegrate into big lumps quickly and thereby weeds started to grow on the entire plot very rapidly.
In conclusion, the compositions (C) according to the present invention can significantly slow down or completely prevent the growth of weeds or other undesirable plants.

## Claims

1. A mulch composition [composition (C), herein after] comprising at least 50.0 weight percent [50.0 wt.%, herein after] of cacao powder, and at least one long fiber compound in an amount at most 20.0 wt.%, wherein said weight percentages are relative to the total weight of the composition (C).

2. The composition (C) according to claim 1, wherein the weight percent of the at least one long fiber compound is from 1.0 wt.% to 15.0 wt.%, preferably from 2.0 wt.% to 7.5 wt.%.

3. The composition (C) according to claim 1 or claim 2, wherein the at least one long fiber compound is derived from natural fibers made from plant or animal sources, synthetic fibers, or a mixture of two or more thereof.

4. The composition (C) according to any one of claims 1 to 3, wherein the at least one long fiber compound is derived from natural fibers made from plant or animal sources.

5. The composition (C) according to any one of claims 1 to 4, wherein the at least one long fiber compound is selected from flax chaff, flax straw, flax fibers, coconut fibers or mixtures of two or more thereof.

6. The composition (C) according to any one of claims 1 to 5, wherein the composition (C) further comprises at least one moisture regulating agent.

7. The composition (C) according to claim 6, wherein the at least one moisture regulating agent is present in an amount from 0.5 wt.% to 15.0 wt.%, preferably from 1.0 wt.% to 10 wt.%, more preferably from 1.5 wt.% to 7.5 wt.%, relative to the total weight of the composition (C).

8. The composition according to claim 6 or claim 7, wherein the at least one moisture regulating agent is selected from rock gravel, grit or split such as pea gravel, basalt split, dolomite or granite grit; concrete grit; baked clay; expanded clay agglomerates; calcine clay; akadama; pumice; asphalt; lava split or lava grit; perlite and expanded perlite; vermiculite; charcoal such as biochar; coarse sand such as silica sand; sea shell debris; or a mixture of two or more thereof, preferably lava split or lava grit.

9. The composition (C) according to any one of claims 1 to 8, wherein the composition (C) further comprises at least one binding agent.

10. The composition (C) according to claim 9, wherein the at least one binding agent is present in an amount from 1.0 wt.% to 15.0 wt.%, preferably from 2.5 wt.% to 12.0 wt.%, more preferably from 4.0 wt.% to 12.0 wt.%, relative to the total weight of the composition (C).

11. The composition (C) according to claim 9 or claim 10, wherein the at least one binding agent is selected from xanthan gum; guar gum; gum arabic; shellac; karaya gum; candelilla wax; tragacanth gum; resins; chalk; liquid glass; lactose powder; diatomaceous earth; rock dust such as basalt powder, lava powder, lime powder, gypsum powder, pumice powder and the like; fly ash; algae powder; cellulose powder; starch powder; zein powder; lignosulfonates; molasses or molasses extracts; vinasses or vinasses extracts, clay minerals such as bentonite, montmorillonite, illite, and kaolinite; loam; animal or plant glue and synthetic binding agents such as synthetic glue, or a mixture comprising at least two thereof, preferably selected from bentonite, lime or mixtures thereof.

12. A method for the manufacturing of the composition (C) according to any one of claims 1 to 11, **characterized in that** said method comprises intimate admixing of at least 50 wt.% of cacao powder, and at most 20 wt.% of the at least one long fiber compound, optionally at most 15 wt.% of the at least one moisture regulating agent, optionally at most 15 wt.% of the at least one binding agent, and optionally any additional ingredient into a homogeneous mixture.

13. A method for forming a ground cover, **characterized in that** said method comprises applying the composition (C) according to any one of claims 1 to 11 onto a locus or area to be covered, and optionally followed by applying water or comprises preparing a slurry of the composition (C) according to any one of claims 1 to 11 with water and applying said slurry to a locus or area to be covered, thereby forming the ground cover.

14. The method according to claim 13, wherein the slurry is prepared by mixing the composition (C) according to any one of claims 1 to 11 with water in amounts varying from 0.5 kg of composition (C) per 1.0 L of water to 0.5 kg of composition (C) per 2.0 L of water, preferably in amounts varying from 0.5 kg of the composition (C) per 1.3 L of water to 0.5 kg of composition (C) per 1.7 L of water.

15. A method for inhibiting the growth of weeds or other undesirable plants by using the composition (C) according to any one of claims 1 to 11.
